# EUROPEAN PATENT APPLICATION

(11) **EP 3 090 871 A1**
(43) Date of publication of application: **09.11.2016**
(21) Application number: 16168599.5
(22) Date of filing: 06.05.2016
(51) Int. Cl.: B32B 5/02, B32B 5/12, B32B 5/24, B32B 5/28, B32B 3/12

(54) **FIBER REINFORCED CORE**

(30) Priority: 05.05.2015 US 201562157021 P
(71) Applicant: Sunrez Corp., El Cajon, CA 92020 (US); Livesay, Mark, El Cajon, California 92020 (US); Tollgaard, Bret, El Cajon, CA 92020 (US)
(72) Inventor: Livesay, Mark, El Cajon, CA California 92020 (US); Tollgaard, Bret, El Cajon, CA California 92020 (US)
(74) Representative: Winter, Brandl, Fürniss, Hübner, Röss, Kaiser, Polte - Partnerschaft mbB

(57) **Abstract**

A fiber reinforced core for use in the production of reinforced panels wherein the fiber reinforced core is comprised of at least one core material, at least one dry fiber layer and either a thermoset or thermoplastic prepreg material. Further, a process of forming a reinforced core and a method of constructing a fiber reinforced core.

## Description

### RELATED APPLICATIONS

This application is a non-provisional application claiming the benefit of priority from US Provisional Application No. 62/157,021, filed on May 5, 2015, the entire contents of which are herein incorporated by reference.

### FIELD OF INVENTION

The present invention pertains generally to reinforced core materials. More particularly, the present invention pertains to fiber reinforced cores for the manufacture of reinforced panels.

Conventional core materials have been used to create panels and sandwich panels for years. Materials such as light weight woods, thermoplastic and thermoset foams, syntactic foams, (filled and unfilled) honeycombs and more have been used to structurally support face sheets and make strong, light weight panels. Each material has advantages and disadvantages associated with it. Balsa wood is known for having very high compressive and shear properties, but is an organic cellulosic material and can swell or rot if exposed to the elements. Foams range in density from very lightweight (2 lb/cubic foot) to exceedingly heavy (16 lb/cubic foot) and their properties and their cost increase along with their density, but foams are not as strong or as stiff as balsa wood and typically soften at higher temperatures. Honeycomb materials help to fill the gap between the strength characteristics of balsa wood and low density foams, but are costly relative to the other materials in addition to being difficult to bond to face sheets.

Reinforced composites are also widely known in the art. Examples in the prior art include the following:
US Patent 3,837,985 issued to Chase discloses a composite fabricated by laying fibers having an uncured resin matrix and driving a series of spaced cured resin impregnated reinforcing elements at least partially through the layers at an angle and curing the composite to bond the elements to the layers. At least one disadvantage of this type of composite is that the driving of the reinforcing elements only partially through the layers lends itself to the potential creation of weak points in the composite at points where the reinforcing elements are absent.
US Patent 5,462,623 issued to Day discloses a method of producing rectangular reinforced foam core panels each having opposite side surfaces and two pairs of generally parallel opposite edge surfaces which can be adapted for use as a core between parallel skins attached to the side surfaces.
US Patent 5,834,082 issued to Day discloses rigid foam pieces or boards and alternating porous fibrous web sheets adhered to foam core panels or billets wherein porosity is maintained in the webs for forming integral structural ties by absorbing resin applied under differential pressure to the webs and to overlying sandwich panel skins.
US Patent 6,645,333 issued to Johnson et al. discloses a method of inserting z-axis reinforcing fibers into a multilayer composite laminate wherein layers of material made up of x-axis fiber and y-axis fibers are punched though the multilayer composite using a solid rod followed by a threading tube through which z-axis fiber is threaded and deposited in the composite.
US Patent 6,824,851 issued to Locher and Tommet discloses a method of producing a phenolic sandwich panel in which phenolic fiber reinforced skins are attached to the upper and lower surface of a core material and a fiber reinforced phenolic material substantially thicker than the skins surrounds the core attaching to both top and bottom skins.
US Patent Publication US2009/0202776 by Brandon et al. discloses a fiber reinforced core panel having a first side and an opposing second side, the core panel containing a series of adjacent low density strips having at least three faces and having a length to width ratio of at least 5:1.

In light of the above, it is an object of the present invention to provide the desired features described herein as well as additional advantages of providing an efficient method of generating a sandwich panel with very light weight core and exceptional strength and stiffness that is not subject to excessive weight gain or biological degradation when contacted with water.

### SUMMARY OF THE INVENTION

The present invention is a fiber reinforced core comprised of layers of at least one fiber material and at least one core material bonded together by at least one polymeric resin.

It is an object of the present invention to provide a fiber reinforced core having increased tensile, shear and compression strength and modulus without significantly increasing the overall weight of the core.

It is another object of the present invention to provide a fiber reinforced core wherein the fiber arrangement in relation to the core material is customizable for the intended use.

It is still another object of the present invention to provide a fiber reinforced core wherein the core may be used in the manufacture of any panel or sandwich panel design currently consisting of foams, honeycombs, woods or other suitable core materials.

It is a further object of the present invention to provide a fiber reinforced core for use in multiple applications, such as by way of example only, replacing balsa wood in boat hulls, replacing cores of wind turbine blades, panels for commercial and military aircrafts, panels for the automotive industry, flooring and wall panels for the construction/building industry and road construction.

### BRIEF DESCRIPTION OF THE DRAWINGS

The novel features of this invention, as well as the invention itself, both as to its structure and its operation, will be best understood from the accompanying drawings, taken in conjunction with the accompanying description, in which similar parts, and in which:
Fig. 1 illustrates an end perspective view of a fiber reinforced core of the present invention.
Fig. 2 illustrates an end perspective view of an alternative embodiment of the fiber reinforced core of the present invention of Fig. 1.
Fig. 3 illustrates an end perspective view of an alternative embodiment of the fiber reinforced core of the present invention of Fig. 1.
Fig. 4 illustrates an end perspective view of an alternative embodiment of the fiber reinforced core of the present invention of Fig. 1.
Fig. 5 illustrates an end perspective view of an alternative embodiment of the fiber reinforced core of the present invention of Fig. 1.
Fig. 6 illustrates a top view of an alternative embodiment of the fiber reinforced core of the present invention.
Fig. 7 illustrates a top view of the fiber reinforced core of the present invention of Fig. 1.
Fig. 8 illustrates a top view of an alternative fiber reinforced core of the present invention.
Fig. 9 illustrates a top view of an alternative fiber reinforced core of the present invention.
Fig. 10 illustrates a front perspective view an alternative fiber reinforced core of the present invention.
Fig. 11 illustrates a side view of the alternative fiber reinforced core of the present invention of Fig. 10.
Fig. 12 illustrates a top perspective view of a sandwich panel having the fiber reinforced core of the present invention.
Fig. 13 illustrates a perspective view of a sandwich panel having the fiber reinforced core of the present invention.
Fig. 14 illustrates a perspective view of a sandwich panel having the fiber reinforced core of the present invention.
Fig. 15 illustrates a perspective view of a sandwich panel having the fiber reinforced core of the present invention.
Fig. 16 illustrates a perspective view of a sandwich panel having the fiber reinforced core of the present invention.
Fig. 17A-17C illustrates a method of constructing a fiber reinforced core of the present invention.
Fig. 18 illustrates an example of thermally bonding a fiber reinforced core of the present invention.

### DETAILED DESCRIPTION OF THE INVENTION

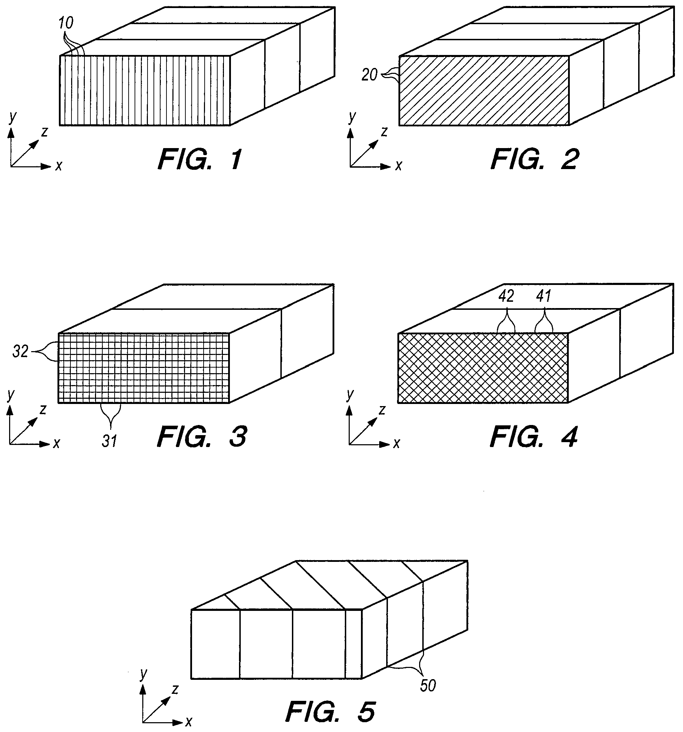

An example of a fiber reinforced core of the present invention is shown in Fig. 1. The fiber layers are shown in a parallel pattern having fiber layers (10) at a 0° orientation from the y-axis. A list of suitable core materials include woods, honeycombs, and foams amongst other possible materials. Wood cores may be comprised of balsa, bamboo, plywood, or other suitable wood material. Honeycomb cores may be comprised of at least one material selected from the group consisting of aluminum, aramid fiber, fiberglass fiber, carbon fiber, polyurethane, polypropylene, polyethylene terephthalate, paper honeycomb, or other suitable honeycomb material. Foam cores may be comprised of at least one material selected from the group consisting of polyurethane, polyvinyl chloride, polyethylene terephthalate, polyisocyanurate, polyethylene, polypropylene, SAN (styrene acrylonitrile), expanded polystyrene, extruded polystyrene, polymethacrylimide, or other suitable foam material.

Referring to Fig. 2, an alternative fiber reinforced core of the present invention is shown having fiber layers in parallel pattern having fiber layers (20) at a 45° orientation from the y-axis. Fiber layers may be comprised of at least one material selected from the group consisting of fiberglass, carbon, aramid, high modulus polyester, Vectran, basalt, flax, or other suitable fiber material.

Referring to Fig. 3, an alternative fiber reinforced core of the present invention is shown having fiber layers in a grid pattern having fibers layers (32) at 0° and fiber layers (31) at 90° orientation from the y-axis. In preferred embodiments the core is bonded to the fiber reinforcement by introduction of a thermoset or thermoplastic prepreg and sufficient energy to generate bonding. Thermoset prepregs may be comprised of at least one resin selected from the group consisting of epoxy, vinylester, isophthalic or orthophthalic polyester, urethane, polyurethane, phenolic, or other suitable material. Thermoplastic prepregs may be comprised of at least one resin selected from the group consisting of polyethylene terephthalate, PEEK, PEI, PBT, nylon, acetal, polypropylene, polyethylene, polystyrene, polycarbonate, Ultem, polysulfone or other suitable material.

Referring to Fig. 4, an alternative fiber reinforced core of the present invention is shown having fiber layers in a grid pattern having fiber layers (41) at +45° and fiber layers (42) at -45 ° orientation from the y-axis. The fiber reinforced cores of the present invention may be customized for a variety of uses wherein fiber density and fiber orientation may be arranged according to intended use. Examples of customized fiber reinforced cores are shown in Fig. 5-11.

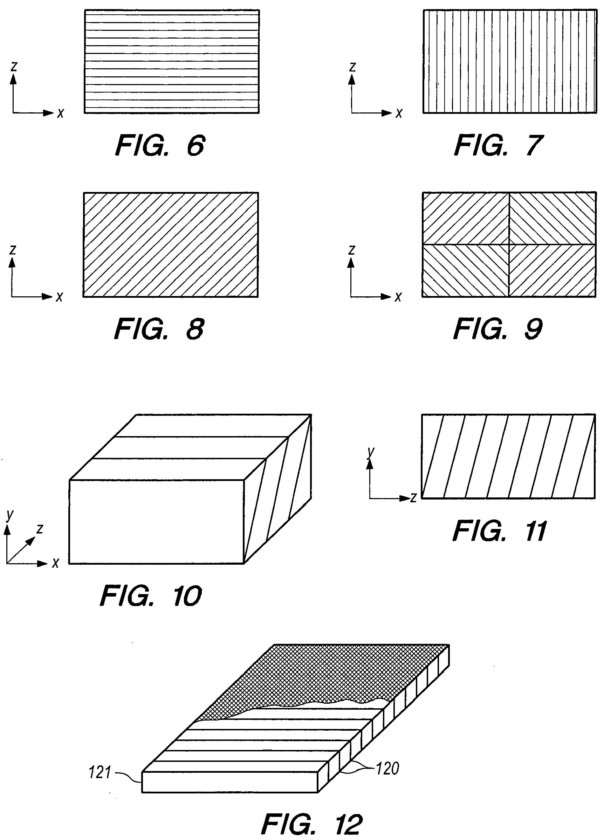

Referring to Fig. 12, a sandwich panel having a fiber reinforced core of the present invention is shown. By way of example only, the fiber layers (120) are parallel at a 0° orientation from the x-axis and the outer panels (121) are perpendicular to the fiber layers at a 90° orientation from the x-axis.

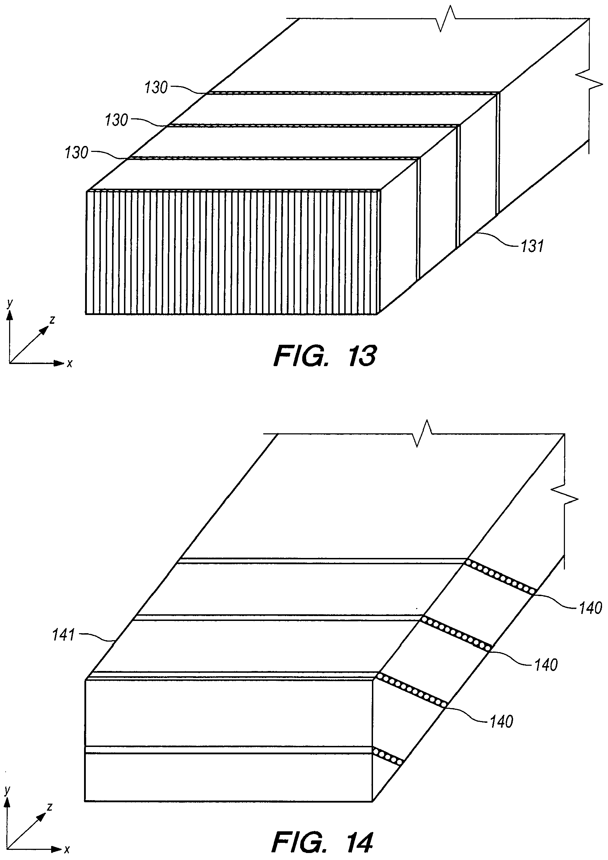

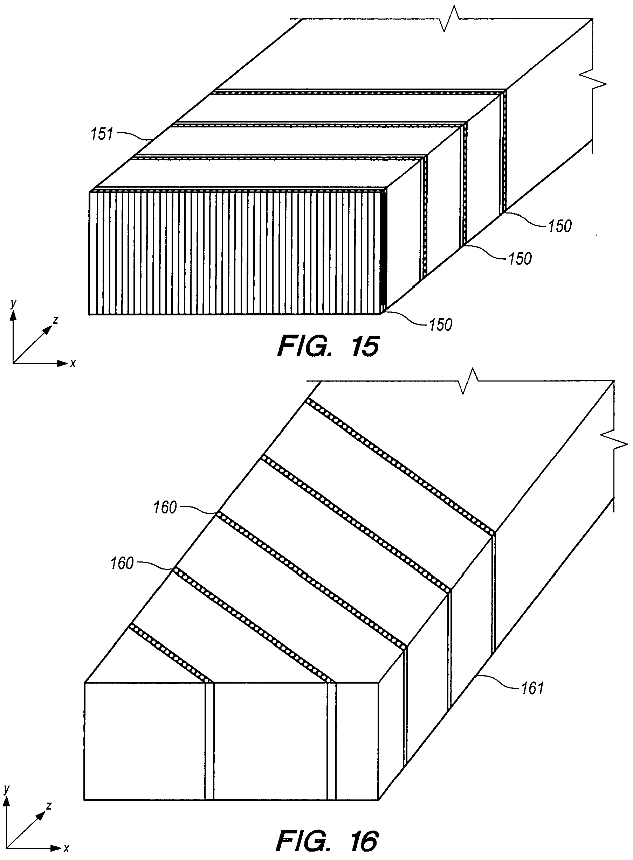

Referring to Fig. 13-16, detailed examples of fiber reinforced cores used within sandwich panels of the present invention are shown. Fig. 13 illustrates the fiber layers (130) at a 0° orientation from the y-axis. Amount of fibers placed in the 0° direction directly reflects the compression characteristics desired for the overall sandwich panel. Fig. 14 illustrates a fiber layers (140) at a -45° orientation from the y/z plane. Placing the fibers -45° orientation relative to the y/z plane impacts shear and bending properties of the core. Fig. 15 illustrates the fiber layers (150) at 0/90° orientation to the x/y plane. Addition of fibers in the 0° and 90° directions increases both compression and shear forces in the directions aligned with the fibers. Fig. 16 illustrates the fiber layers (160) at a 45° orientation to the core. Combining variations of fiber reinforcement profiles throughout a core material and sandwich panel directly effects the overall mechanical properties of materials.

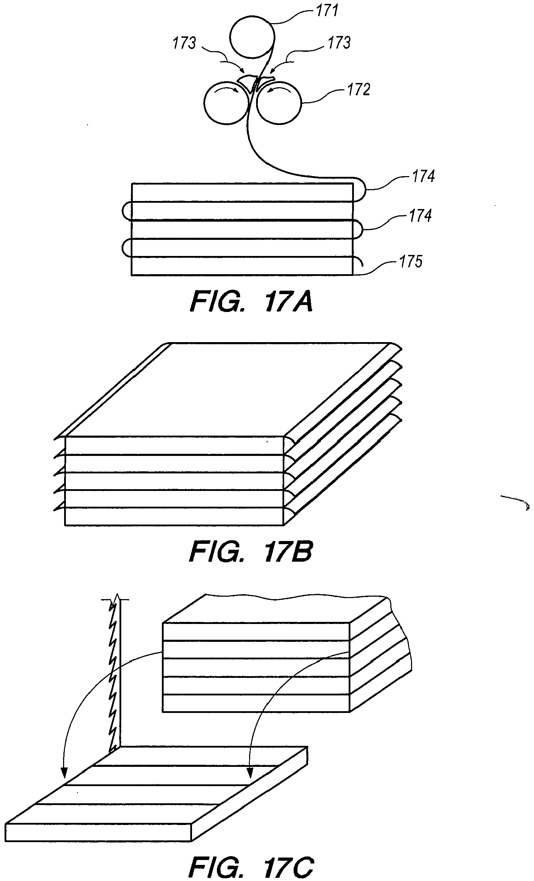

Referring to Fig. 17, a method of constructing prepreg and embedding it in layers of a core material can be seen. A roll of fiber (171) can be seen being drawn through pinch rollers (172) while thermoset or thermoplastic resin (173) impregnates the dry fiber. Pinch rollers (172) are spaced such that an adequate amount of resin is used to wetout the dry fiber and provide enough excess resin to wetout the surrounding core material to sufficiently bond each layer. As seen in Fig. 17A, the prepgreg (174) is continuously drawn between layers of core material (175). Fig. 17B shows the prepreg being cut at the end of each pass. Fig. 17C shows the cured fiber reinforced core bun being trimmed to a given thickness by use of a band saw.

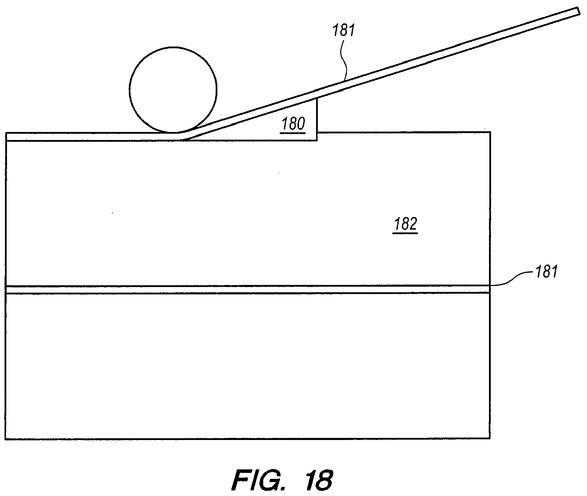

Referring to Fig. 18, the use of hot knife (180) can be seen being drawn through surrounding materials to thermally bond the fiber reinforcements (181) to the core material (182). As such, three variations of thermally bonding fiber reinforcements (181) can be concluded. Type B Examples 18-29 can be made by applying heat to a thermoplastic fiber reinforced prepreg and applying compression to press the heated thermoplastic fiber reinforcements to the layer of core material to acquire adequate adhesion. Type C Examples 30-37 can be made by applying heat to a thermoplastic core material and applying enough compression to dry fiber to adequately embed the dry fiber reinforcements into the surface of the thermoplastic core material and acquire sufficient bond strength. Type F Examples 38-49 can be made by applying heat to a thermoplastic core and thermoplastic prepreg simultaneously while following the thermoplastic prepreg with a compression device to embed the fiber reinforcements into the thermoplastic core material. Type E Examples 50-52 can be made by applying heat to a thermoplastic core and enough compression to a thermoset prepreg to adequately embed the fiber reinforced thermoset sheet into the face of the thermoplastic core material and sufficiently bond one to another. Type D Example 53 can be made by heating up a thermoplastic core material by itself and embedding a thermoplastic fiber reinforced by means of compression into the heated thermoplastic core material to sufficiently bond one material to another.

### Preparation of Thermoset and Thermoplastic Prepregs.

Prepregs are defined as the product resulting from the impregnation of a fibrous media (chopped strand or continuous filament mat, CSM, CFM; woven or knitted fabrics); and Nonwovens which are broadly defined as sheet or web structures bonded together by entangling fiber or filaments mechanically, thermally, or chemically, with either a thermosetting resin or a thermoplastic resin (polymer). This process of preparing a prepreg forms a structure in which a resin, either a thermosetting or thermoplastic polymeric system, substantially wets out the surface of each microscopic strand (typically strands of fiber measure from as little as 4 to 40 microns in diameter) composing the fibrous media. The prepreg is composed of a mixture of resin and fiber where the weight ratio of the two components ranges from 15-85% resin with the fiber making up the remainder.

The thermoset prepregs used in the following examples were generated in-house by passing the fibrous media through a set of pinch rollers with a gap set between the rollers sufficient to allow the glass to pass through with some compression on the surface of the fibrous material. As the fibrous material is being fed into the top of the gap between the rollers, a quantity of thermoset resin was added to the top across the entire width of the rollers, which provided sufficient resin to be drawn in and compressed into the fibers by action of the rollers drawing the fibers and the resin from top to bottom of the roller gap. (See Fig. 17) The result of this room temperature process is a thoroughly wetted fiber system with a controlled amount of resin that is the thermoset prepreg.

Thermoplastic prepregs are made in a somewhat analogous process but typically performed at significantly higher temperatures and pressures. The thermoplastic prepregs used in the examples below were purchased from commercial sources.

### Type A EXAMPLES: Fiber reinforced thermoset prepreg layered between core material (EX 1-17+)

Example 1: Pre-impregnated 12 oz/yd² 0/90 stitched E-Glass (fiberglass) with Pro-Set room temp cure LAM 135/229 Epoxy is continuously layered with a net areal weight of 20 oz/yd² in between sequentially stacked 1 in. thick sheets of 4.1 lb/ft³ PET foam, to create a fiber reinforced bun which can then be trimmed by means of a band saw into flat sheets at 2 in. thick perpendicular to the direction of the fiber reinforcement.
Example 2: Pre-impregnated 12 oz/yd² 0/90 stitched E-Glass with Pro-Set room temp cure LAM 135/226 Epoxy is continuously layered with a net areal weight of 20 oz/yd² in between sequentially stacked 1 in. thick sheets of 4.1 lb/ft³ PET foam, to create a fiber reinforced bun which can then be trimmed by means of a band saw into flat sheets at 2 in. thick perpendicular to the direction of the fiber reinforcement.
Example 3: Pre-impregnated 12 oz/yd² 0/90 stitched E-Glass with West System 105/205 Epoxy is continuously layered with a net areal weight of 20 oz/yd² in between sequentially stacked 1 in. thick sheets of 4.1 lb/ft³ PET foam, to create a fiber reinforced bun which can then be trimmed by means of a band saw into flat sheets at 2 in. thick perpendicular to the direction of the fiber reinforcement.
Example 4: Pre-impregnated 18 oz/yd² 0/90 stitched E-Glass with Pro-Set room temp cure LAM 135/229 Epoxy is continuously layered with a net areal weight of 20 oz/yd² in between sequentially stacked 1 in. thick sheets of 4.1 lb/ft³ PET foam, to create a fiber reinforced bun which can then be trimmed by means of a band saw into flat sheets at 2 in. thick perpendicular to the direction of the fiber reinforcement.
Example 5: Pre-impregnated 12 oz/yd² 0/90 stitched E-Glass with Pro-Set room temp cure LAM 135/229 Epoxy is continuously layered with a net areal weight of 20 oz/yd² in between sequentially stacked 0.75 in. thick sheets of 4.1 lb/ft³ PET foam, to create a fiber reinforced bun which can then be trimmed by means of a band saw into flat sheets at 2 in. thick perpendicular to the direction of the fiber reinforcement.
Example 6: Pre-impregnated 12 oz/yd² 0/90 stitched E-Glass with Pro-Set room temp cure LAM 135/229 Epoxy is continuously layered with a net areal weight of 20 oz/yd² in between sequentially stacked 0.5 in. thick sheets of 4.1 lb/ft³ PET foam, to create a fiber reinforced bun which can then be trimmed by means of a band saw into flat sheets at 2 in. thick perpendicular to the direction of the fiber reinforcement.
Example 7: Pre-impregnated 12 oz/yd² 0/90 stitched E-Glass with Pro-Set room temp cure LAM 135/229 Epoxy is continuously layered with a net areal weight of 20 oz/yd² in between sequentially stacked 1 in. thick sheets of 5.6 lb/ft³ PET foam, to create a fiber reinforced bun which can then be trimmed by means of a band saw into flat sheets at 2 in. thick perpendicular to the direction of the fiber reinforcement.
Example 8: Pre-impregnated 12 oz/yd² 0/90 stitched E-Glass with Pro-Set room temp cure LAM 135/229 Epoxy is continuously layered with a net areal weight of 20 oz/yd² in between sequentially stacked 1 in. thick sheets of 6.8 lb/ft³ PET foam, to create a fiber reinforced bun which can then be trimmed by means of a band saw into flat sheets at 2 in. thick perpendicular to the direction of the fiber reinforcement.
Example 9: Pre-impregnated 12 oz/yd² 0/90 stitched E-Glass with Pro-Set room temp cure LAM 135/229 Epoxy is continuously layered with a net areal weight of 20 oz/yd² in between sequentially stacked 1 in. thick sheets of 4 lb/ft³ Urethane foam, to create a fiber reinforced bun which can then be trimmed by means of a band saw into flat sheets at 2 in. thick perpendicular to the direction of the fiber reinforcement.
Example 10: Pre-impregnated 12 oz/yd² 0/90 stitched E-Glass with Pro-Set room temp cure LAM 135/229 Epoxy is continuously layered with a net areal weight of 20 oz/yd² in between sequentially stacked 1 in. thick sheets of 2 lb/ft³ Styrofoam Blue Board, to create a fiber reinforced bun which can then be trimmed by means of a band saw into flat sheets at 2 in. thick perpendicular to the direction of the fiber reinforcement.
Example 11: Pre-impregnated 12 oz/yd² 0/90 stitched E-Glass with Pro-Set room temp cure LAM 135/229 Epoxy is continuously layered with a net areal weight of 20 oz/yd² in between sequentially stacked 1 in. thick sheets of 4.1 lb/ft³ PET foam, to create a fiber reinforced bun which can then be trimmed by means of a table saw into flat sheets at 2 in. thick perpendicular to the direction of the fiber reinforcement.
Example 12: Pre-impregnated 12 oz/yd² 0/90 stitched E-Glass with Pro-Set room temp cure LAM 135/229 Epoxy is continuously layered with a net areal weight of 20 oz/yd² in between sequentially stacked 1 in. thick sheets of 4.1 lb/ft³ PET foam, to create a fiber reinforced bun which can then be cut by means of a hot wire into flat sheets at 2 in. thick perpendicular to the direction of the fiber reinforcement.
Example 13: Pre-impregnated 12 oz/yd² 0/90 stitched E-Glass with Pro-Set room temp cure LAM 135/229 Epoxy is layered in trimmed sections with a net areal weight of 20 oz/yd² in between sequentially stacked 1 in. thick sheets of 4.1 lb/ft³ PET foam, to create a fiber reinforced bun which can then be trimmed by means of a band saw into flat sheets at 2 in. thick perpendicular to the direction of the fiber reinforcement.
Example 14: Pre-impregnated 18 oz/yd² 0/90 stitched E-Glass with Pro-Set room temp cure LAM 135/229 Epoxy is continuously layered with a net areal weight of 20 oz/yd² in between sequentially stacked 1 in. thick sheets of 4.1 lb/ft³ PET foam, to create a fiber reinforced bun which can then be trimmed by means of a band saw into flat sheets at 2 in. thick perpendicular to the direction of the fiber reinforcement.
Example 15: Pre-impregnated 19 oz/yd² 0/90 stitched E-Glass with Pro-Set room temp cure LAM 135/229 Epoxy is continuously layered with a net areal weight of 20 oz/yd² in between sequentially stacked 1 in. thick sheets of 4.1 lb/ft³ PET foam, to create a fiber reinforced bun which can then be trimmed by means of a band saw into flat sheets at 2 in. thick perpendicular to the direction of the fiber reinforcement.
Example 16: Pre-impregnated 21 oz/yd² 0/90 stitched E-Glass with Pro-Set room temp cure LAM 135/229 Epoxy is continuously layered with a net areal weight of 20 oz/yd² in between sequentially stacked 1 in. thick sheets of 4.1 lb/ft³ PET foam, to create a fiber reinforced bun which can then be trimmed by means of a band saw into flat sheets at 2 in. thick perpendicular to the direction of the fiber reinforcement.
Example 17: Pre-impregnated 22 oz/yd² 0/90 stitched E-Glass with Pro-Set room temp cure LAM 135/229 Epoxy is continuously layered with a net areal weight of 20 oz/yd² in between sequentially stacked 1 in. thick sheets of 4.1 lb/ft³ PET foam, to create a fiber reinforced bun which can then be trimmed by means of a band saw into flat sheets at 2 in. thick perpendicular to the direction of the fiber reinforcement.

### Type B EXAMPLES: Thermoplastic fiber reinforced sheets (polystrand 20 oz) heated up to bond to sheet of core material (PET) hot plate/knife (EX 18-29)

Example 18: Heat is applied to a premade thermoplastic prepreg sheet comprising 6 oz/yd² Uni-directional fiberglass layers pressed into a 0/90 configuration within a PET resin matrix bonding it to 4.1 lb/ft³ PET foam sheets by means of a hot plate at a temperature of 450° F and a feed rate of 1 in./sec. Consecutive layers of thermoplastic prepreg sheets and core material are used to construct a new bun of fiber reinforced foam core which can then be cut into flat sheets at 2 in. thick perpendicular to the direction of the fiber reinforcement.
Example 19: Heat is applied to a premade thermoplastic prepreg sheet comprising 8 oz/yd² Uni-directional fiberglass layers pressed into a 0/90 configuration within a PET resin matrix bonding it to 4.1 lb/ft³ PET foam sheets by means of a hot plate at a temperature of 450° F and a feed rate of 1 in./sec. Consecutive layers of thermoplastic prepreg sheets and core material are used to construct a new bun of fiber reinforced foam core which can then be cut into flat sheets at 2 in. thick perpendicular to the direction of the fiber reinforcement.
Example 20: Heat is applied to a premade thermoplastic prepreg sheet comprising 12 oz/yd² Uni-directional fiberglass oriented in a 90° configuration within a PET resin matrix bonding it to 4.1 lb/ft³ PET foam sheets by means of a hot plate at a temperature of 450° F and a feed rate of 1 in./sec. Consecutive layers of thermoplastic prepreg sheets and core material are used to construct a new bun of fiber reinforced foam core which can then be cut into flat sheets at 2 in. thick perpendicular to the direction of the fiber reinforcement.
Example 21: Heat is applied to a premade thermoplastic prepreg sheet comprising 6 oz/yd² Uni-directional fiberglass layers pressed into a 0/90 configuration within a PET resin matrix bonding it to 5.6 lb/ft³ PET foam sheets by means of a hot plate at a temperature of 450° F and a feed rate of 1 in./sec. Consecutive layers of thermoplastic prepreg sheets and core material are used to construct a new bun of fiber reinforced foam core which can then be cut into flat sheets at 2 in. thick perpendicular to the direction of the fiber reinforcement.
Example 22: Heat is applied to a premade thermoplastic prepreg sheet comprising 6 oz/yd² Uni-directional fiberglass layers pressed into a 0/90 configuration within a PET resin matrix bonding it to 6.8 lb/ft³ PET foam sheets by means of a hot plate at a temperature of 450° F and a feed rate of 1 in./sec. Consecutive layers of thermoplastic prepreg sheets and core material are used to construct a new bun of fiber reinforced foam core which can then be cut into flat sheets at 2 in. thick perpendicular to the direction of the fiber reinforcement.
Example 23: Heat is applied to a premade thermoplastic prepreg sheet comprising 6 oz/yd² Uni-directional fiberglass layers pressed into a 0/90 configuration within a PET resin matrix bonding it to 4 lb/ft³ Urethane foam sheets by means of a hot plate at a temperature of 450° F and a feed rate of 1 in./sec. Consecutive layers of thermoplastic prepreg sheets and core material are used to construct a new bun of fiber reinforced foam core which can then be cut into flat sheets at 2 in. thick perpendicular to the direction of the fiber reinforcement.
Example 24: Heat is applied to a premade thermoplastic prepreg sheet comprising 6 oz/yd² Uni-directional fiberglass layers pressed into a 0/90 configuration within a PET resin matrix bonding it to 2 lb/ft³ Styrofoam Blue Board foam sheets by means of a hot plate at a temperature of 450° F and a feed rate of 1 in./sec. Consecutive layers of thermoplastic prepreg sheets and core material are used to construct a new bun of fiber reinforced foam core which can then be cut into flat sheets at 2 in. thick perpendicular to the direction of the fiber reinforcement.
Example 25a: Heat is applied to a premade thermoplastic prepreg sheet comprising 6 oz/yd² Uni-directional fiberglass layers pressed into a 0/90 configuration within a PET resin matrix bonding it to 4.1 lb/ft³ PET foam sheets by means of a hot plate at a temperature of 400° F and a feed rate of 1 in./sec. Consecutive layers of thermoplastic prepreg sheets and core material are used to construct a new bun of fiber reinforced foam core which can then be cut into flat sheets at 2 in. thick perpendicular to the direction of the fiber reinforcement.
Example 25b: Heat is applied to a premade thermoplastic prepreg sheet comprising 6 oz/yd² Uni-directional fiberglass layers pressed into a 0/90 configuration within a PET resin matrix bonding it to 4.1 lb/ft³ PET foam sheets by means of a hot plate at a temperature of 500° F and a feed rate of 1 in./sec. Consecutive layers of thermoplastic prepreg sheets and core material are used to construct a new bun of fiber reinforced foam core which can then be cut into flat sheets at 2 in. thick perpendicular to the direction of the fiber reinforcement.
Example 26: Heat is applied to a premade thermoplastic prepreg sheet comprising 6 oz/yd² Uni-directional fiberglass layers pressed into a 0/90 configuration within a PET resin matrix bonding it to 4.1 lb/ft³ PET foam sheets by means of a hot plate at a temperature of 450° F and a feed rate of 0.25-12 in./sec. Consecutive layers of thermoplastic prepreg sheets and core material are used to construct a new bun of fiber reinforced foam core which can then be cut into flat sheets at 2 in. thick perpendicular to the direction of the fiber reinforcement.
Example 27a: Heat is applied to a premade thermoplastic prepreg sheet comprising 6 oz/yd² Uni-directional fiberglass layers pressed into a 0/90 configuration within a PET resin matrix bonding it to 4.1 lb/ft³ PET foam sheets by means of a hot plate at a temperature of 450° F and a feed rate of 1 in./sec. Consecutive layers of thermoplastic prepreg sheets and core material are used to construct a new bun of fiber reinforced foam core which alternatively does not require being cut into flat sheets at 2 in. thick perpendicular to the direction of the fiber reinforcement.
Example 28a: Heat is applied to a premade thermoplastic prepreg sheet comprising 6 oz/yd² Uni-directional fiberglass layers pressed into a 0/90 configuration within a PET resin matrix bonding it to 4.1 lb/ft³ PET foam sheets by means of a hot plate at a temperature of 450° F and a feed rate of 1 in./sec. Consecutive layers of thermoplastic prepreg sheets and core material are used to construct a new bun of fiber reinforced foam core which can then be cut into any shape or sheet type desired at 2 in. thick perpendicular to the direction of the fiber reinforcement.
Example 29a: Heat is applied to a premade thermoplastic prepreg sheet comprising 6 oz/yd² Uni-directional fiberglass layers pressed into a 0/90 configuration within a PET resin matrix bonding it to 4.1 lb/ft³ PET foam sheets by means of a hot plate at a temperature of 450° F and a feed rate of 1 in./sec. Consecutive layers of thermoplastic prepreg sheets and core material are used to construct a new bun of fiber reinforced foam core which can then be cut into flat sheets at the desired thickness for a typical sandwich panel, including but not limited to, 0.5", 0.75", 1" or 2", perpendicular to the direction of the fiber reinforcement.
Example 27b: Heat is applied to a premade thermoplastic prepreg sheet comprising 6 oz/yd² Uni-directional fiberglass layers pressed into a 0/90 configuration within a PET resin matrix bonding it to 4.1 lb/ft³ PET foam sheets by means of a hot knife at a temperature of 450° F and a feed rate of 1 in./sec. Consecutive layers of thermoplastic prepreg sheets and core material are used to construct a new bun of fiber reinforced foam core which can then be cut into flat sheets at 2 in. thick perpendicular to the direction of the fiber reinforcement.
Example 28b: Heat is applied to a premade thermoplastic prepreg sheet comprising 6 oz/yd² Uni-directional fiberglass layers pressed into a 0/90 configuration within a PET resin matrix bonding it to 4.1 lb/ft³ PET foam sheets by means of a hot knife at a controlled temperature of 450° F and a feed rate of 1 in./sec. Consecutive layers of thermoplastic prepreg sheets and core material are used to construct a new bun of fiber reinforced foam core which can then be cut into flat sheets at 2 in. thick perpendicular to the direction of the fiber reinforcement.
Example 29b: Heat is applied to a premade thermoplastic prepreg sheet comprising 6 oz/yd² Uni-directional fiberglass layers pressed into a 0/90 configuration within a PET resin matrix bonding it to 4.1 lb/ft³ PET foam sheets by means of a hot knife at a temperature of 450° F and a feed rate of between 0.25-12 1in./sec. Consecutive layers of thermoplastic prepreg sheets and core material are used to construct a new bun of fiber reinforced foam core which can then be cut into flat sheets at 2 in. thick perpendicular to the direction of the fiber reinforcement.

### Type C EXAMPLES: Thermoplastic core material heated up to embed dry fiber sheets (EX 30-37)

Example 30: Heat is applied to a PET foam by use of a hot plate at a temperature of 450° F and a feed rate of 1 in./sec wherein dry 12 oz/yd² 0/90 stitched E-Glass is pressed into the softened surface of the thermoplastic core material, which forms an in-situ thermoplastic prepreg, joining the two surfaces by penetration of the softened thermoplastic material into the vacancies of the 12 oz/yd² 0/90 stitched E-Glass. Following the same procedure of heating the surface of a thermoplastic core material and placing it atop the embedded fiber reinforcement provides a means of stacking alternating layers of core and fiber reinforcement to construct a bun which can then be trimmed by means of a band saw into flat sheets at 2 in. thick perpendicular to the direction of the fiber reinforcement.
Example 31: Heat is applied to a PET foam by use of a hot knife at a temperature of 450° F and a feed rate of 1 in./sec wherein dry 12 oz/yd² 0/90 stitched E-Glass is pressed into the softened surface of the thermoplastic core material, which forms an in-situ thermoplastic prepreg, joining the two surfaces by penetration of the softened thermoplastic material into the vacancies of the 12 oz/yd² 0/90 stitched E-Glass. Following the same procedure of heating the surface of a thermoplastic core material and placing it atop the embedded fiber reinforcement provides a means of stacking alternating layers of core and fiber reinforcement to construct a bun which can then be trimmed by means of a band saw into flat sheets at 2 in. thick perpendicular to the direction of the fiber reinforcement.
Example 32a: Heat is applied to a PET foam by use of a hot plate at a controlled temperature of 400° F and a feed rate of 1 in./sec wherein dry 12 oz/yd² 0/90 stitched E-Glass is pressed into the softened surface of the thermoplastic core material, which forms an in-situ thermoplastic prepreg, joining the two surfaces by penetration of the softened thermoplastic material into the vacancies of the 12 oz/yd² 0/90 stitched E-Glass. Following the same procedure of heating the surface of a thermoplastic core material and placing it atop the embedded fiber reinforcement provides a means of stacking alternating layers of core and fiber reinforcement to construct a bun which can then be trimmed by means of a band saw into flat sheets at 2 in. thick perpendicular to the direction of the fiber reinforcement.
Example 32b: Heat is applied to a PET foam by use of a hot plate at a controlled temperature of 500° F and a feed rate of 1 in./sec wherein dry 12 oz/yd² 0/90 stitched E-Glass is pressed into the softened surface of the thermoplastic core material, which forms an in-situ thermoplastic prepreg, joining the two surfaces by penetration of the softened thermoplastic material into the vacancies of the 12 oz/yd² 0/90 stitched E-Glass. Following the same procedure of heating the surface of a thermoplastic core material and placing it atop the embedded fiber reinforcement provides a means of stacking alternating layers of core and fiber reinforcement to construct a bun which can then be trimmed by means of a band saw into flat sheets at 2 in. thick perpendicular to the direction of the fiber reinforcement.
Example 33: Heat is applied to a PET foam by use of a hot plate at a temperature of 450° F and a feed rate of 1 in./sec wherein dry 18 oz/yd² 0/90 stitched E-Glass is pressed into the softened surface of the thermoplastic core material, which forms an in-situ thermoplastic prepreg, joining the two surfaces by penetration of the softened thermoplastic material into the vacancies of the 12 oz/yd² 0/90 stitched E-Glass. Following the same procedure of heating the surface of a thermoplastic core material and placing it atop the embedded fiber reinforcement provides a means of stacking alternating layers of core and fiber reinforcement to construct a bun which can then be trimmed by means of a band saw into flat sheets at 2 in. thick perpendicular to the direction of the fiber reinforcement.
Example 34: Heat is applied to a PET foam by use of a hot plate at a temperature of 450° F and a feed rate of 1 in./sec wherein dry 12 oz/yd² 0/90 stitched E-Glass is pressed into the softened surface of the thermoplastic core material, which forms an in-situ thermoplastic prepreg, joining the two surfaces by penetration of the softened thermoplastic material into the vacancies of the 12 oz/yd² 0/90 stitched E-Glass. Following the same procedure of heating the surface of a thermoplastic core material and placing it atop the embedded fiber reinforcement provides a means of stacking alternating layers of core and fiber reinforcement to construct a bun which can then be trimmed by means of a table saw into flat sheets at 2 in. thick perpendicular to the direction of the fiber reinforcement.
Example 35: Heat is applied to a PET foam by use of a hot plate at a temperature of 450° F and a feed rate of 1 in./sec wherein dry 12 oz/yd² 0/90 stitched E-Glass is pressed into the softened surface of the thermoplastic core material, which forms an in-situ thermoplastic prepreg, joining the two surfaces by penetration of the softened thermoplastic material into the vacancies of the 12 oz/yd² 0/90 stitched E-Glass. Following the same procedure of heating the surface of a thermoplastic core material and placing it atop the embedded fiber reinforcement provides a means of stacking alternating layers of core and fiber reinforcement to construct a bun which can then be trimmed by means of a band saw into any shape or sheet type desired at 2 in. thick perpendicular to the direction of the fiber reinforcement.
Example 36: Heat is applied to a PET foam by use of a hot plate at a temperature of 450° F and a feed rate of 1 in./sec wherein dry 12 oz/yd² 0/90 stitched E-Glass is pressed into the softened surface of the thermoplastic core material, which forms an in-situ thermoplastic prepreg, joining the two surfaces by penetration of the softened thermoplastic material into the vacancies of the 12 oz/yd² 0/90 stitched E-Glass. Following the same procedure of heating the surface of a thermoplastic core material and placing it atop the embedded fiber reinforcement provides a means of stacking alternating layers of core and fiber reinforcement to construct a bun which can then be trimmed by means of a band saw into any shape or sheet type desired at 2 in. thick perpendicular to the direction of the fiber reinforcement.
Example 37: Heat is applied to a PET foam by use of a hot plate at a temperature of 450° F and a feed rate of 1 in./sec wherein dry 12 oz/yd² 0/90 stitched E-Glass is pressed into the softened surface of the thermoplastic core material, which forms an in-situ thermoplastic prepreg, joining the two surfaces by penetration of the softened thermoplastic material into the vacancies of the 12 oz/yd² 0/90 stitched E-Glass. Following the same procedure of heating the surface of a thermoplastic core material and placing it atop the embedded fiber reinforcement provides a means of stacking alternating layers of core and fiber reinforcement to construct a bun which can then be trimmed by means of a band saw into flat sheets at 2 in. thick at any angle relative to the direction of the fiber reinforcement.

### Type D EXAMPLES: Any combination of Examples 3-5 in which a thermoplastic is heated either individually or in combination with another thermoplastic core material to securely bond fiber reinforcements to surrounding core material (EX 38-49)

Example 38: Heat is applied to a premade thermoplastic prepreg sheet comprising 6 oz/yd² Uni-directional fiberglass layers pressed into a 0/90 configuration within a thermoplastic PET resin matrix and to 4.1 lb/ft³ PET foam sheets by means of a hot knife at a temperature of 450° F and a feed rate of 1 in./sec. Consecutive layers of thermoformed fiber reinforcement and sheets of core material are used to construct a new fiber reinforced core bun which can then be cut into flat sheets at 2 in. thick.
Example 39: Heat is applied to a premade thermoplastic prepreg sheet comprising 8 oz/yd² Uni-directional fiberglass layers pressed into a 0/90 configuration within a thermoplastic PET resin matrix and to 4.1 lb/ft³ PET foam sheets by means of a hot knife at a temperature of 450° F and a feed rate of 1 in./sec. Consecutive layers of thermoformed fiber reinforcement and sheets of core material are used to construct a new fiber reinforced core bun which can then be cut into flat sheets at 2 in. thick.
Example 40: Heat is applied to a premade thermoplastic prepreg sheet comprising 12 oz/yd² Uni-directional fiberglass layers oriented in a 90° configuration within a thermoplastic PET resin matrix and to 4.1 lb/ft³ PET foam sheets by means of a hot knife at a temperature of 450° F and a feed rate of 1 in./sec. Consecutive layers of thermoformed fiber reinforcement and sheets of core material are used to construct a new fiber reinforced core bun which can then be cut into flat sheets at 2 in. thick.
Example 41: Heat is applied to a premade thermoplastic prepreg sheet comprising 6 oz/yd² Uni-directional fiberglass layers pressed into a 0/90 configuration within a thermoplastic PET resin matrix and to 5.6 lb/ft³ PET foam sheets by means of a hot knife at a temperature of 450° F and a feed rate of 1 in./sec. Consecutive layers of thermoformed fiber reinforcement and sheets of core material are used to construct a new fiber reinforced core bun which can then be cut into flat sheets at 2 in. thick.
Example 42: Heat is applied to a premade thermoplastic prepreg sheet comprising 6 oz/yd² Uni-directional fiberglass layers pressed into a 0/90 configuration within a thermoplastic PET resin matrix and to 6.8 lb/ft³ PET foam sheets by means of a hot knife at a temperature of 450° F and a feed rate of 1 in./sec. Consecutive layers of thermoformed fiber reinforcement and sheets of core material are used to construct a new fiber reinforced core bun which can then be cut into flat sheets at 2 in. thick.
Example 43: Heat is applied to a premade thermoplastic prepreg sheet comprising 6 oz/yd² Uni-directional fiberglass layers pressed into a 0/90 configuration within a thermoplastic PET resin matrix and to 4 lb/ft³ Urethane foam sheets by means of a hot knife at a temperature of 450° F and a feed rate of 1 in./sec. Consecutive layers of thermoformed fiber reinforcement and sheets of core material are used to construct a new fiber reinforced core bun which can then be cut into flat sheets at 2 in. thick.
Example 44: Heat is applied to a premade thermoplastic prepreg sheet comprising 6 oz/yd² Uni-directional fiberglass layers pressed into a 0/90 configuration within a thermoplastic PET resin matrix and to 2 lb/ft³ Styrofoam Blue Board foam sheets by means of a hot knife at a temperature of 450° F and a feed rate of 1 in./sec. Consecutive layers of thermoformed fiber reinforcement and sheets of core material are used to construct a new fiber reinforced core bun which can then be cut into flat sheets at 2 in. thick.
Example 45a: Heat is applied to a premade thermoplastic prepreg sheet comprising 6 oz/yd² Uni-directional fiberglass layers pressed into a 0/90 configuration within a thermoplastic PET resin matrix and to 4.1 lb/ft³ PET foam sheets by means of a hot knife at a controlled temperature of 400-500° F and a feed rate of 1 in./sec. Consecutive layers of thermoformed fiber reinforcement and sheets of core material are used to construct a new fiber reinforced core bun which can then be cut into flat sheets at 2 in. thick.
Example 45b: Heat is applied to a premade thermoplastic prepreg sheet comprising 6 oz/yd² Uni-directional fiberglass layers pressed into a 0/90 configuration within a thermoplastic PET resin matrix and to 4.1 lb/ft³ PET foam sheets by means of a hot knife at a controlled temperature of 500° F and a feed rate of 1 in./sec. Consecutive layers of thermoformed fiber reinforcement and sheets of core material are used to construct a new fiber reinforced core bun which can then be cut into flat sheets at 2 in. thick.
Example 46: Heat is applied to a premade thermoplastic prepreg sheet comprising 6 oz/yd² Uni-directional fiberglass layers pressed into a 0/90 configuration within a thermoplastic PET resin matrix and to 4.1 lb/ft³ PET foam sheets by means of a hot knife at a temperature of 450° F and a feed rate of 0.25-12 in./sec. Consecutive layers of thermoformed fiber reinforcement and sheets of core material are used to construct a new fiber reinforced core bun which can then be cut into flat sheets at 2 in. thick.
Example 47: Heat is applied to a premade thermoplastic prepreg sheet comprising 6 oz/yd² Uni-directional fiberglass layers pressed into a 0/90 configuration within a thermoplastic PET resin matrix and to 4.1 lb/ft³ PET foam sheets by means of a hot knife at a temperature of 450° F and a feed rate of 1 in./sec. Consecutive layers of thermoformed fiber reinforcement and sheets of core material are used to construct a new fiber reinforced core bun which can then be cut into flat sheets at 2 in. thick.
Example 48: Heat is applied to a premade thermoplastic prepreg sheet comprising 6 oz/yd² Uni-directional fiberglass layers pressed into a 0/90 configuration within a thermoplastic PET resin matrix and to 4.1 lb/ft³ PET foam sheets by means of a hot knife at a temperature of 450° F and a feed rate of 1 in./sec. Consecutive layers of thermoformed fiber reinforcement and sheets of core material are used to construct a new fiber reinforced core bun which can then be cut into flat sheets at 2 in. thick.
Example 49: Heat is applied to a premade thermoplastic prepreg sheet comprising 6 oz/yd² Uni-directional fiberglass layers pressed into a 0/90 configuration within a thermoplastic PET resin matrix and to 4.1 lb/ft³ PET foam sheets by means of a hot knife at a temperature of 450° F and a feed rate of 1 in./sec. Consecutive layers of thermoformed fiber reinforcement and sheets of core material are used to construct a new fiber reinforced core bun which can then be cut into flat sheets at any desired thickness.

### Type E EXAMPLES: Thermoplastic core materials heated up to embed fiber reinforced thermoset prepreg (50)

Example 50: Heat is applied to a PET foam by use of a hot plate at a temperature of 450° F and a feed rate of 1 in./sec wherein a cured fiber reinforced sheet consisting of 12 oz/yd² 0/90 stitched E-Glass and Pro-Set LAM 135/229 resin is pressed into the softened surface of the thermoplastic core material joining the two materials. Following the same procedure of heating the surface of a thermoplastic core material and placing it atop the embedded fiber reinforcement provides a means of stacking alternating layers of core and fiber reinforcement to construct a bun which can then be trimmed by means of a band saw into flat sheets at 2 in. thick perpendicular to the direction of the fiber reinforcement.

### EXAMPLE F: Heating of thermoplastic foam core to consolidate with precured thermoset prepregs (51-52)

Example 51: Heat is applied to a PET foam by use of a hot knife at a temperature of 450° F and a feed rate of 1 in./sec wherein a cured fiber reinforced sheet consisting of 12 oz/yd² 0/90 stitched E-Glass and Pro-Set LAM 135/229 resin is pressed into the softened surface of the thermoplastic core material joining the two materials. Following the same procedure of heating the surface of a thermoplastic core material and placing it atop the embedded fiber reinforcement provides a means of stacking alternating layers of core and fiber reinforcement to construct a bun which can then be trimmed by means of a band saw into flat sheets at 2 in. thick perpendicular to the direction of the fiber reinforcement.
Example 52a: Heat is applied to a PET foam by use of a hot plate at a controlled temperature of 400° F and a feed rate of 1 in./sec wherein a cured fiber reinforced sheet consisting of 12 oz/yd² 0/90 stitched E-Glass and Pro-Set LAM 135/229 resin is pressed into the softened surface of the thermoplastic core material joining the two materials. Following the same procedure of heating the surface of a thermoplastic core material and placing it atop the embedded fiber reinforcement provides a means of stacking alternating layers of core and fiber reinforcement to construct a bun which can then be trimmed by means of a band saw into flat sheets at 2 in. thick perpendicular to the direction of the fiber reinforcement.
Example 52b: Heat is applied to a PET foam by use of a hot plate at a controlled temperature of 500° F and a feed rate of 1 in./sec wherein a cured fiber reinforced sheet consisting of 12 oz/yd² 0/90 stitched E-Glass and Pro-Set LAM 135/229 resin is pressed into the softened surface of the thermoplastic core material joining the two materials. Following the same procedure of heating the surface of a thermoplastic core material and placing it atop the embedded fiber reinforcement provides a means of stacking alternating layers of core and fiber reinforcement to construct a bun which can then be trimmed by means of a band saw into flat sheets at 2 in. thick perpendicular to the direction of the fiber reinforcement.

### Type G EXAMPLE: Thermoplastic core material heated up to embed fiber reinforced thermoplastic sheets (53)

Example 53: Heat is applied to a PET foam by use of a hot plate at a temperature of 450° F and a feed rate of 1 in./sec wherein a thermoplastic fiber reinforced sheet consisting of 6 oz/yd² Uni-directional fiberglass layers pressed into a 0/90 configuration within a PET resin matrix is pressed into the softened surface of the thermoplastic core material joining the two materials. Following the same procedure of heating the surface of a thermoplastic core material and placing it atop the embedded fiber reinforcement provides a means of stacking alternating layers of core and fiber reinforcement to construct a bun which can then be trimmed by means of a band saw into flat sheets at 2 in. thick perpendicular to the direction of the fiber reinforcement.

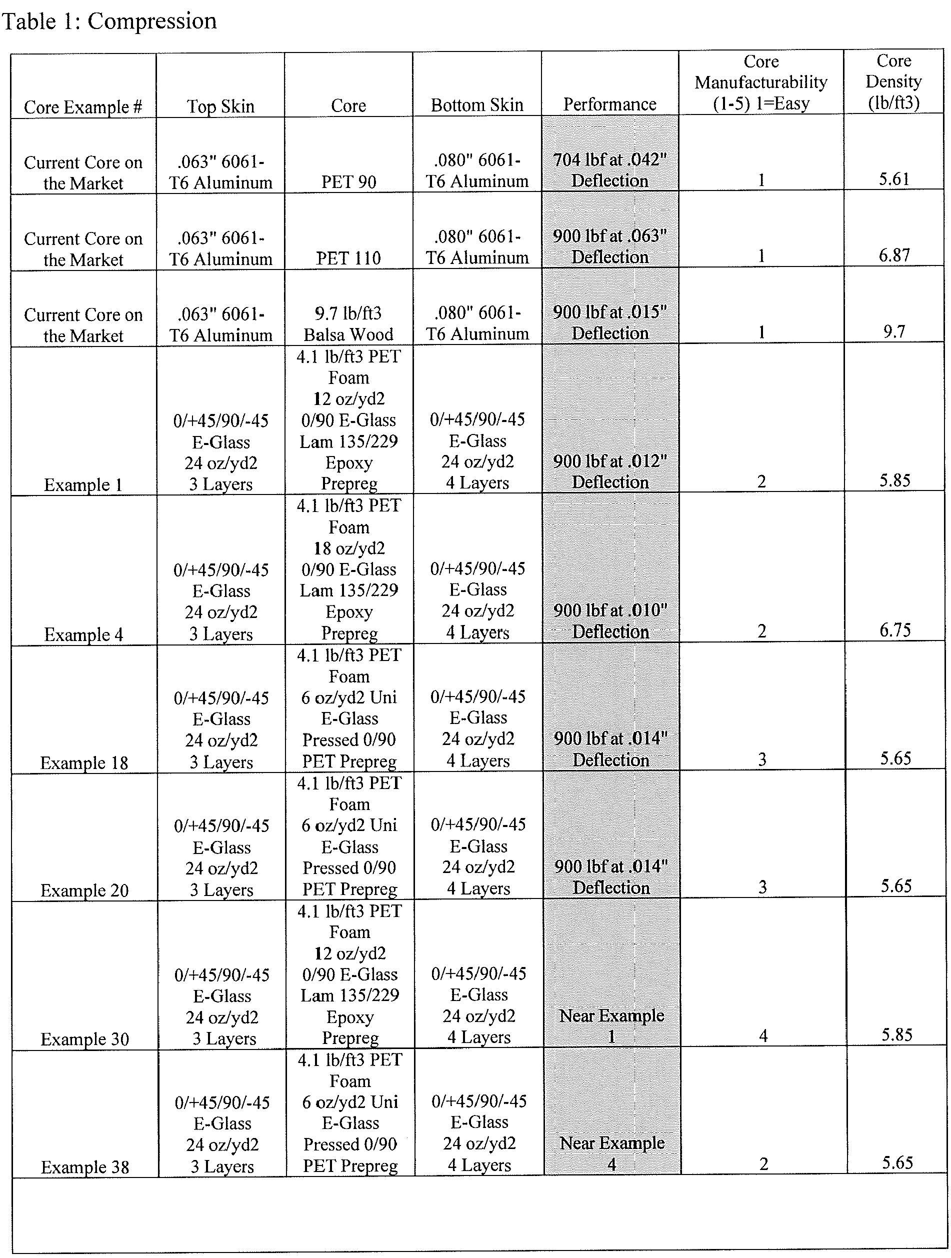

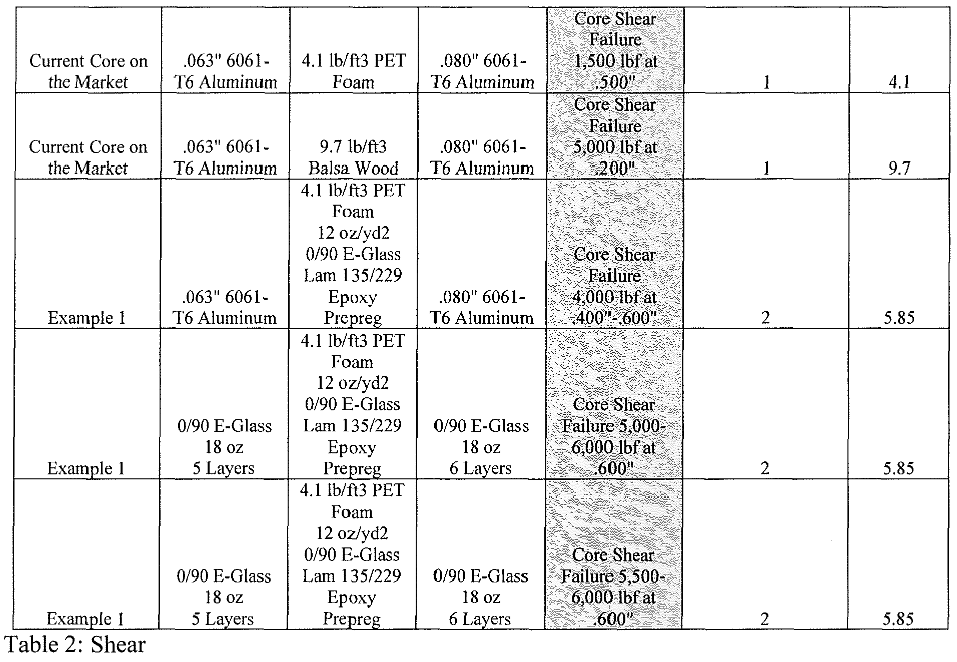

Table 1 represents the effects of fiber reinforcement in foam cores relative to cores currently on the market in compression testing. All of the configurations in Table 1 are sandwich panels which include a core material, top skin, bottom skin and adhesive bonding of the skins to the core. Data in Table 1 was attained by means of compressing a 1" x 1" x .5" steel mandrel to the top surface of the sandwich panel and measuring the force and displacement generated by an Instron UTM. The data confirms that adding fiber reinforcements according to the described example methods of the present invention substantially increases the compression properties while adding very little weight to the base foam material. Compression strength and modulus of fiber reinforced foam rivals or exceeds the compression properties of end grain balsa wood while being 40% lighter.

Table 2 displays the effects of fiber reinforcement in foam cores relative to cores currently on the market in sandwich panel core shear testing. All of the configurations in Table 1 are sandwich panels which include a core material, top skin, bottom skin and adhesive bonding the skins to the core measuring 26" x 8" x 2.25" panels. The data confirms that adding fiber reinforcements according to the described example methods of the present invention substantially increases the shear properties of the core while adding very little weight to the overall sandwich panel. Adjusting the skin material aids in tailoring the mechanical properties of the sandwich panel and the shear properties of the fiber reinforced foam sandwich panel can rival or exceed the properties of the baseline end grain balsa wood while being up 40% lighter in this configuration.

The present invention provides a fiber reinforced core comprised of layers of at least one core material and at least one fiber layer impregnated with at least one thermoset or thermoplastic resin.

In the first embodiment, the core material is wood, honeycomb, foam, or other suitable core material.

In another embodiment, the wood core may be at least one wood selected from the group consisting of balsa, bamboo, plywood, or other suitable material.

In still another embodiment, the honeycomb core may be comprised of at least one material selected from the group consisting of aluminum, aramid fiber, fiberglass fiber, carbon fiber, polyurethane, polypropylene, polyethylene terephthalate, paper honeycomb, or other suitable material.

In another embodiment, the foam core may be comprised of at least one material selected from the group consisting of polyurethane, polyvinyl chloride, polyethylene terephthalate, urethane, polyethylene, expanded polystyrene, extruded polystyrene, polymethacrylimide or other suitable material.

In yet another embodiment, the fiber layers may be comprised of at least one material selected from the group consisting of fiberglass, carbon, aramid, high modulus polyester, Vectran, basalt, flax or other suitable material.

In a further embodiment, the fiber and core layers are bonded using a prepreg comprising fiber and either a thermosetting or thermoplastic material. In a preferred embodiment, the thermoset prepreg may be comprised of at least one resin selected from the group consisting of epoxy, vinylester, isophthalic or orthophthalic polyester, urethane, polyurethane, phenolic or other suitable material. In another preferred embodiment, the thermoplastic prepreg may be comprised of at least one resin selected from the group consisting of polyethylene terephthalate, PEEK, PEI, PBT, nylon, acetal, polypropylene, polyethylene, polystyrene, polycarbonate, Ultem, polysulfone or other suitable material.

In a still further embodiment, the fiber reinforced cores may be customized for a variety of uses wherein fiber density, material, and orientation about a core comprised of a suitable material may be arranged according to intended use.

In another embodiment, the orientation of the fiber layers in the core results in increased stiffness of the reinforced core without significantly increasing the weight of the overall core panel.

In yet another embodiment, the present invention provides a process for forming a reinforced core wherein the reinforced core comprises stacked sheets of a lightweight material with at least one thermoset or thermoplastic prepreg material between the sheets and further wherein the reinforced core is consolidated by applying sufficient heat and/or pressure.

In a further embodiment, the present invention provides a method of constructing a reinforced core, the method comprising impregnating a dry fiber and embedding the impregnated fiber within layers of a core material.

In still another embodiment, the dry fiber is drawn through pinch rollers while thermoset or thermoplastic resin impregnates the dry fiber. In a preferred embodiment, pinch rollers are spaced such that an adequate amount of resin will wetout the dry fiber and provide enough excess resin to wetout the surrounding core material thereby sufficiently bonding each layer. The prepgreg is continuously drawn between layers of core material, cut at the end of each pass and trimmed to a given thickness using a band saw.

In another embodiment, a hot knife is drawn through the materials in order to thermally bond the fiber reinforcements to the core material. In a preferred embodiment, the fiber reinforcements can be bonded by applying heat to a thermoplastic fiber reinforced prepreg and applying compression to press the heated thermoplastic fiber reinforcements to the layer of core material to acquire adequate adhesion. In another preferred embodiment, the fiber reinforcements can be bonded by applying heat to a thermoplastic core material and applying enough compression to dry fiber to adequately embed the dry fiber reinforcements into the surface of the thermoplastic core material and acquire sufficient bond strength. In still another preferred embodiment, the fiber reinforcement can be bonded by applying heat to a thermoplastic core and thermoplastic prepreg simultaneously while following the thermoplastic prepreg with a compression device to embed the fiber reinforcements into the thermoplastic core material. In a further embodiment, the fiber reinforcement can be bonded by applying heat to a thermoplastic core and enough compression to a thermoset prepreg to adequately embed the fiber reinforced thermoset sheet into the face of the thermoplastic core material and sufficiently bond one to another. In a further still embodiment, the fiber reinforcement can be bonded by heating up a thermoplastic core material by itself and embedding a thermoplastic fiber reinforced by means of compression into the heated thermoplastic core material to sufficiently bond one material to another.

The foregoing detailed description is not to be taken in a limiting sense, and the scope of the present invention is defined by the appended claims and their equivalents. Although several embodiments have been presented, one skilled in the art will appreciate that various modifications are possible. Such variations will not materially alter the nature of the invention. Many embodiments may be conceived and may not achieve all the advantages of some embodiments, particularly preferred embodiments, yet the absence of a particular advantage shall not be construed to necessarily mean that such an embodiment is outside the scope of the present invention.

## Claims

1. A process for forming a reinforced core wherein the reinforced core comprises stacked sheets of a lightweight material and a fiber layer impregnated with at least one thermoset or thermoplastic prepreg material between the sheets and further wherein the reinforced core is consolidated by applying sufficient heat and/or pressure.

2. The process of claim 1 wherein the lightweight material is comprised of at least one material selected from the group consisting of balsa wood, bamboo, plywood, aluminum, aramid fiber, fiberglass fiber, carbon fiber, polyurethane, polypropylene, polyethylene terephthalate, paper honeycomb, polyurethane, polyvinyl chloride, polyethylene terephthalate, urethane, polyethylene, expanded polystyrene, extruded polystyrene, and polymethacrylimide.

3. The process of claim 1 wherein the prepreg material is thermoset.

4. The process of claim 3 wherein the prepreg material is comprised of at least one resin selected from the group consisting of epoxy, vinylester, isophthalic or orthophthalic polyester, urethane, polyurethane, and phenolic.

5. The process of claim 1 wherein the prepreg material is thermoplastic.

6. The process of claim 5 wherein the prepreg material is comprised of at least one resin selected from the group consisting of polyethylene terephthalate, PEEK, PEI, PBT, nylon, acetal, polypropylene, polyethylene, polystyrene, polycarbonate, Ultem, and polysulfone.

7. The process of claim 1 wherein the fiber layer is comprised of at least one material selected from the group consisting of fiberglass, carbon, aramid, high modulus polyester, Vectran, basalt, and flax.

8. A method of constructing a fiber reinforced core, the method comprising:
selecting at least one core material;
selecting at least one dry fiber layer material; and
selecting either a thermoset or thermoplastic prepreg material,
wherein the at least one fiber layer is bonded to the core material.

9. The method of claim 8, wherein the core material is cut into lightweight sheets.

10. The method of claim 8, wherein the method is further comprised of drawing a dry fiber through pinch rollers while thermoset or thermoplastic resin impregnates the dry fiber.

11. The method of claim 10 wherein the impregnated fiber is continuously drawn between layers of the core material as the core material is stacked.

12. The method of claim 10 wherein a heated instrument is drawn through the materials in order to thermally bond the impregnated fiber layer to the core material.

13. The method of claim 11 wherein the stacked core material is bonded to the impregnated fiber by compression.

14. A panel suitable for arrangement in an array comprising a top skin, a fiber reinforced core and a bottom skin, wherein the top skin is comprised of at least one layer of stitched fiberglass, the fiber reinforced core is comprised of at least one layer of core material, at least one fibrous prepreg material that is thermoset or thermoplastic and the bottom skin is comprised of at least one layer of stitched fiberglass.
